Europäisches Patentamt

European Patent Office

Office européen des brevets

(11) Publication number: **0 451 695 A2**

# EUROPEAN PATENT APPLICATION

(21) Application number: 91105304.9

(22) Date of filing: 04.04.91

(51) Int. Cl.5: **H04M 3/42, H04Q 3/70**

(30) Priority: 05.04.90 US 507076

(43) Date of publication of application:
16.10.91 Bulletin 91/42

(84) Designated Contracting States:
**CH DE FR GB IT LI NL SE**

(71) Applicant: TEXAS INSTRUMENTS
INCORPORATED
13500 North Central Expressway
Dallas Texas 75265(US)

(72) Inventor: McMahan, Michael L.
3817 Merriman Drive
Plano, Texas 75074(US)
Inventor: Scruggs, Jeffrey L.
1534 Spring Aire Lane
Lewisville, Texas 75067(US)
Inventor: Harrison, Herman W.
4012 Riverview
Plano, Texas 75023(US)

Inventor: Mathes, Connie M.
6909 Custer Road, Apt. No. 3007
Plano, Texas 75023(US)
Inventor: Price, Barry
13005 Heinemann Drive
Austin, Texas 78727(US)
Inventor: Meharg, Earl B.
11107 Yucca Drive
Austin, Texas 78759(US)
Inventor: Killian, Robert T.
113 W. Bancroft Street
Garland, Texas 75040(US)
Inventor: Hendrickson, Jeffrey J.
4108 Woodenrail Lane
Irving, Texas 75061(US)

(74) Representative: Leiser, Gottfried, Dipl.-Ing. et
al
Patentanwälte Prinz, Leiser, Bunke & Partner
Manzingerweg 7
W-8000 München 60(DE)

(54) **Method and apparatus for securing access to telecommunications based assets and services.**

(57) A method and apparatus for authorizing access to telecommunications based assets and services includes acknowledging an attempt by a caller to use the service, requesting entry of a service access, requesting entry of an authorization code, requesting voice entry of a password, verifying the identity of the caller based on the caller's voice, and allowing access to the service if the caller's identity is verified as being that of a valid subscriber to the service.

Other methods and apparatuses are also disclosed.

FIG. 1

EP 0 451 695 A2

## CROSS-REFERENCE TO RELATED APPLICATIONS

This application is related to the following applications assigned to the assignee of this application, filed concurrently herewith and which are hereby incorporated by reference as if fully set forth herein:
Application Serial Number 505,855 entitled
"Enhanced Services Platform for Telecommunications Systems";
Application Serial Number 505,747 entitled
"Method and Apparatus for Providing Integrated Access to Telecommunication Based Services";
Application Serial Number 505,871 entitled
"User Interfaces to Telecommunications Based Services"; and
Application Serial Number 505,870 entitled
"Call Delivery Telecommunications Service".

## FIELD OF THE INVENTION

The present invention relates generally to methods and apparatus for securing access to telecommunications based assets and services, and specifically to such methods and apparatus utilizing voice verification to identify authorized users of such assets and/or services.

## BACKGROUND OF THE INVENTION

The telecommunications industry has experienced significant changes over recent years. More and more services are now being offered to customers which can be accessed via existing, or in some cases new and dedicated, telecommunications networks. The variety of services now available reflects the competitive nature of the marketplace as well as the advent of new technologies. Telecommunications service providers are offering their customers a plurality of enhanced services designed to increase revenue and expand the utility of telephone instruments. Telecommunications customers via their telephone can now access databases, bank accounts, securities accounts, messaging systems and various other services in addition to long distance telephone service.

Access to these services generally is controlled through the use of authorization codes assigned to users of the services. When a customer desires access to a particular service to which he or she has subscribed, the authorization code must be entered, usually via the touchtone pad on the telephone instrument, before access is granted. Alternatively, certain telephone equipment may permit the entry of the authorization code by passing a card similar to a credit card through a magnetic card reader which detects and transmits the authorization code over the telephone lines thus allowing the customer to avoid entering the code by hand.

One drawback with these methods of authorizing access to a telecommunications service is that anyone with access to a legitimate authorization code can access the service, thereby presenting a serious security problem. This problem is not unique to any particular sequence of steps for accessing the service, since the authorization code is subject to being lost or stolen. If, for example, a subscriber loses the authorization code, or has it stolen, the system can be accessed by an unauthorized subscriber until the authorization code is canceled. In the interim, unauthorized services can result in substantial financial losses to the subscriber and/or the telecommunications service provider. Also, the subscriber is required to enroll once again to access the service. A new authorization code must be issued to the subscriber, and typically a new authorization or subscriber identification card must be created and sent to the subscriber for future use. The subscriber, therefore, is put in the position of having to become accustomed to using a different and unfamiliar authorization code. The subscriber essentially enrolls as a user of the system once again. These enrollment procedures are significantly different than the procedures a subscriber uses to access and use the system on a regular basis. The experience can be extremely frustrating for subscribers, and potentially detrimental to service providers who are dependent upon customer satisfaction for expansion of their services.

Some telecommunications services, such as long distance calling for example, are accessed using a dialing sequence which generally requires that the caller first access the service and then seek authorization to proceed. For example, the current industry standard dial plan for long distance calling card service access requires a subscriber to first access the service by dialing a "0" followed by the 10-digit destination number which the subscriber is calling. The system then prompts the subscriber to enter his or her authorization code which typically is a 14-digit number similar to a credit card number. If the authorization code is recognized by the system as valid, service access is authorized and the call is completed. No commonly available dialing plan supports the opposite dialing sequence, i.e., entry of the authorization code before entry of the destination number, and no currently available service using any dial plan incorporates the caller's voice as a system access security mechanism.

One problem associated with the dialing sequence such as that employed in connection with long distance calling is that since every caller is required to attempt to access the service by entering a 10-digit destination number before authorization is granted, significant call hold time is wasted for those callers who fail the authorization step for one reason or another. The hold time is expensive and does not produce revenue for the telecommunications service provider since charges are made only for the time the caller is connected to the destination number. The result is an inefficient use of the service provider's assets.

## SUMMARY OF THE INVENTION

One object of the present invention is to provide a method of authorizing access to a telecommunications based service network which makes use of a subscriber's voice to authorize service access.

Another object of the present invention is to provide a method of authorizing access to a telecommunications based service network in which enrollment as a user of the system is transparent to the prospective user.

Another object of the present invention is to provide a method of authorizing access to a telecommunications based service network in which re-enrollment as a user of the system is transparent to the user.

Another object of the present invention is to provide a method of authorizing access to a telecommunications based service network which is capable of supporting a variety of different dial plans.

Another object of the present invention is to provide a method of authorizing access to a telecommunications based service network in which the dial plan is capable of accepting either voice commands or DTMF commands.

Another object of the present invention is to provide a method of authorizing access to a telecommunications based service network in which the authorization codes used are user friendly passwords.

Another object of the present invention is to provide a method of authorizing access to a telecommunications based service network in which the caller's voice is used to both identify a subscriber using speaker independent recognition and to verify a subscriber's identity using voice verification.

Another object of the present invention is to provide a method of authorizing access to a telecommunications based service network which uses selected digits in a password to serve as a redundancy check to improve the performance of the speech recognition/identification process.

Another object of the present invention is to provide a method of authorizing access to a long distance calling network which uses a subscriber's voice to authorize access to the network.

The method of the present invention includes the steps of acknowledging an attempt by a caller to use the system; requesting voice entry of a password; verifying the identity of the caller based on the caller's voice; and allowing access to the system if the caller's identity is verified as being that of a valid subscriber to the system. The password used in the method may be a word or group of words, but preferably includes a number or sequence of numbers with which the caller is familiar, such as his or her telephone number. In one aspect of this invention a portion of the password can be utilized to provide checksums to enhance the performance of the speech recognition/identification process as disclosed in U.S. Patent Application S.N. 350,060. Alternatively, the password may include a prefix or suffix which can be used to provide the checksums. The method may also include entry of an authorization code via the DTMF keypad or via the caller's voice. In the case of entry of an authorization code via the caller's voice, the authorization code also preferably acts as the password. In this embodiment of the present invention, voice recognition is used to interpret the caller's command and voice verification is used to identify the caller as an authorized subscriber to the system.

Enrollment and any re-enrollment as a subscriber to the system is performed so as to be transparent to the user. Enrollment is accomplished by the caller performing the same or similar steps required to access the system under normal conditions. The caller, therefore, experiences no significantly different treatment when using the system as compared to when enrolling, or re-enrolling as a user of the system.

The apparatus of the present invention includes a computer based database for storing templates of subscriber's voice samples. When a caller attempts to access a telecommunications based service network, the caller is requested to provide a voice sample which is compared to the stored sample in the template. If a match occurs, access is granted. If no match occurs, a variety of caller treatments may be implemented depending upon the goals and objectives of the service provider.

The method and apparatus of the present invention can be used in connection with long distance calling systems and networks. In such applications, the present invention can be used to enhance the security afforded with current dialing plans, or preferably used to provide an improved dialing plan in which access is authorized prior to entry of a destination number. Various modifications can be incorporated into the use of the method of the present invention for providing long distance calling services depending upon the level of security and service requirements desired in a particular application.

## BRIEF DESCRIPTION OF THE DRAWINGS

Many variations of the disclosed method may become apparent to those skilled in the art upon reading the following description of the preferred embodiment of the present invention taken together with the accompanying drawings, in which:

Figure 1 is a flow chart showing the steps of one embodiment of the method of the present invention;

Figure 2 is a flow chart showing the steps of an alternative embodiment of the method of the present invention;

Figure 3 is a flow chart showing the steps of and the embodiment of the method of the present invention;

Figure 4 is a flow chart showing the steps of another alternative embodiment of the method of the present invention;

Figure 5 is a flow chart showing the steps of one method of verifying the identity of a caller according to the method of the present invention; and

Figure 6 is a flow chart showing the steps of one method of enrolling users in accordance with the method of the present invention.

## DESCRIPTION OF THE PREFERRED EMBODIMENT

The method of the present invention secures access to a telecommunications network or service by using the distinctive features of the customers own voice thereby providing an enhanced user interface while also securing access to the telecommunications system assets and/or services. The method can be used to secure access to a wide variety of telecommunication based services such as, without limitation, long distance calling, voice messaging systems, company virtual private networks, banking services, securities accounts, and database services.

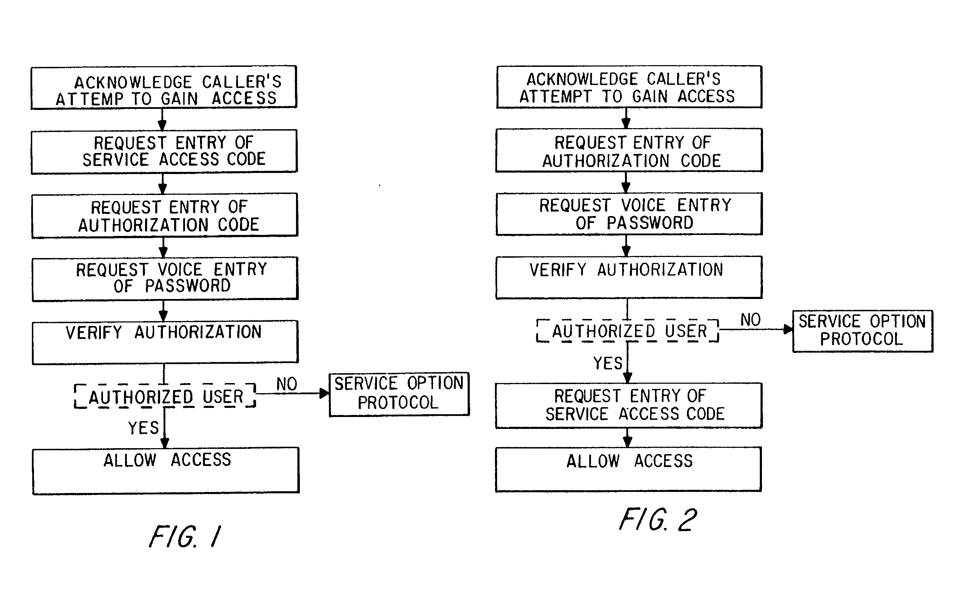

The method of the present invention is shown in the flow chart of Figure 1. The initial step in the method is to acknowledge an attempt by a caller to access the system. This is typically accomplished by answering a telephone call from a caller to the system such as via a toll free telephone number, for example. The acknowledgement may take the form of a "beep", or a prerecorded voice response indicating that the caller has contacted the telecommunications service.

As shown in Figure 1, the next step is to request from the caller entry a service access code. It should be noted, however, that this step may occur at various positions of the method as depicted in Figures 2-6 which illustrate alternative embodiments of the present invention.

The caller is then requested to enter his or her authorization code. The caller may respond in a variety of ways in accordance with the method of the present invention. First, the authorization code may be entered in a conventional way via the keypad of the telephone instrument being used. Advantages associated with this mode of entry of the authorization code are that the public is generally familiar with this mode, and existing telecommunications services which have issued such codes may continue to use them. An alternative mode of entry is to require the caller to say the authorization code. Voice recognition means can be employed to interpret the caller's statement of the authorization code, and voice verification means such as that disclosed in U.S. Patent Application S.N. 350,060, which is hereby incorporated herein by reference as if fully set forth, can be used to determine whether or not the caller is an authorized subscriber to the telecommunications service by comparing the caller's voice to a stored version, or template, of the alleged subscriber's voice. In one embodiment of the present invention the authorization code also functions as the password described below. A more thorough discussion of this version of the method of the present invention will be discussed hereinafter.

In the case of entry of the authorization code by conventional methods, the caller is further requested to say a password. Preferably, the password is a "user friendly" phrase so acceptance of the method by users of the system is facilitated. The password may be a spoken phrase assigned to, or chosen by, the subscriber upon enrollment. Such phrases may simply be the subscriber's name, for example. The choice of phrases obviously is virtually unlimited, and can be made depending upon the particular needs or desires of the telecommunications service provider. The password also can be a familiar sequence of numbers such as the caller's home telephone number, social security number, or other number with which the subscriber is familiar. The benefit afforded by the present method is that the password can be chosen so as to avoid the necessity of a caller having to refer to a written or printed version of the password when it is to be entered. The more personal the password chosen, the less likely are the chances of it being lost or stolen by an unauthorized user. The method of the present invention is extremely flexible and adaptable to the needs of a particular application.

Having received the spoken password, a comparison is made between that password and a stored version of it associated with the subscriber ostensibly seeking entry to the system. If the voices match, entry to the telecommunications system is authorized and the caller may proceed. If there is no match, a variety of alternatives can be used in keeping with the method of the present invention depending upon the objectives of the service provider. One option, of course, is to disconnect the caller from the system with or without advance warning. This type of rather curt treatment of potential subscribers/customers may be undesirable for a variety of reasons in many applications. This may be particularly true when service providers are attempting to stimulate interest in usage of their service, and are highly sensitive to any activity which may be considered offensive to existing or potential subscribers. Alternative treatment may therefore be advisable in many situations.

One possible alternative is to have the call directed to an operator in the event there is no voice match. While this treatment may prove useful in some situations, it generally tends to defeat the overall purpose of the system. Consequently, other alternatives may prove to be more useful.

Another alternative in the event of a voice mismatch is to request the caller to repeat the password, and compare this repeated version of the password with the stored version. If there is a match, authorization is granted. If there still is no match, it should be apparent that multiple subsequent requests may be made until some predetermined limit of attempts are made to identify the caller. In the event of an ultimate failure to obtain a match any other treatment can be implemented.

Still another alternative if there is no voice match, is to request entry of a personal identification number (PIN) via the telephone keypad. If there is no voice match, but the caller enters the correct PIN, authorization can be granted and the subscriber notified at the subsequent time, and if desired re-enrolled as described hereinafter. As discussed below, one aspect of the present invention is that it can be changed and adapted to meet the needs of the service provider. If, for example, a main goal of the telecommunications service provider is to have an interface which does not intimidate subscribers and empha-sizes customer service, the foregoing method can be designed to allow one access in the event of no voice match after perhaps three attempts to gain access by the caller.

It should be clear that one or more of the foregoing treatments, as well as others, can be utilized to accommodate a variety of situations depending upon the goals and objectives of the service provider. Again, the method of the present invention is flexible enough to accommodate diverse system configurations.

The method of the present invention also is adaptable to permit the use of alternate and varied dialing plans. One such variation includes the step of acknowledging an attempt by a caller to access the system as discussed above. Rather than initially requesting the service access code, however, the next step in the method is to request the caller's authorization code as shown in Figure 2. This step is followed by requesting spoken entry of the caller's password. The method is capable of allowing entry of the authorization code and/or the password either verbally or manually via the telephone keypad. The identity of the caller is then verified as being either a valid subscriber to the service or not based upon the spoken password. The call treatments used depending upon whether or not there is a voice match can be varied to meet the requirements of the service provider as discussed above.

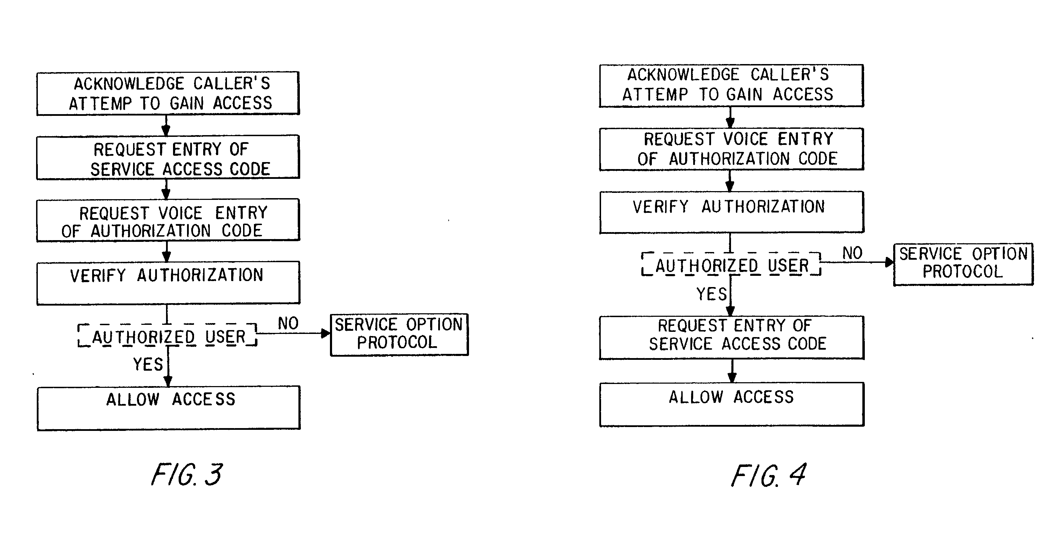

Another dialing plan capable of being supported by the present method includes combining the authorization code and the password into one step as shown in Figure 3 and 4, so that the caller attempting to access the service need provide only one spoken phrase or sequence of digits to be processed by the system for the purposes of both recognizing the phrase and identifying the caller as a valid subscriber. This may be accomplished by designating selected passwords which also serve the purpose of authorization codes. In this alternative embodiment the caller is requested to say his or her password, such as a home or business telephone number, for example. The password, of course, can be any phrase or sequence of digits indicative of the identity of the caller as a valid subscriber to the service. It is preferred, however, that the password be one with which the subscriber is familiar, thereby obviating the need to provide subscribers with written or printed versions. System security is thereby enhanced.

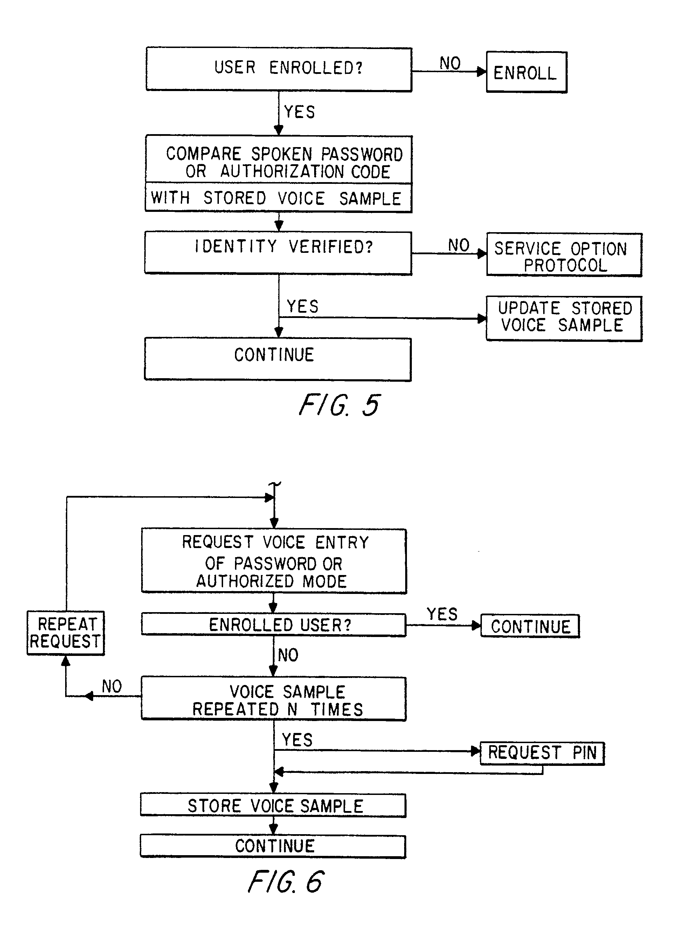

The method of the present invention provides an interface which can support several additional unique features. In accordance with one possible overriding theme of providing a user interface which is simple and easy to use from the callers perspective, the interface can be designed to provide for on-line enrollment as a subscriber to the system the first time a caller uses the system. Preferably, the enrollment process closely resembles actual use of the system from the caller's viewpoint so that the caller may not even be aware of performing any special procedure during enrollment as shown in Figures 5 and 6.

Upon the initial attempt to access the service, when the caller is requested to say his authorization code or his password as the case may be, a template is created and stored on a computer for further use to compare with the subscriber's voice during subsequent attempts to access the service. Although the template can be created using only one statement from the caller, it is preferable that the caller be requested to say the authorization code or password more than once to obtain a more reliable sampling of his or her voice. If, for example, it was determined for a particular service application that callers would be allowed three attempts to verify their identity by saying the authorization code or password, the method utilized upon enrollment could require three statements of the authorization code or password upon enrollment to create the template. Prospective subscribers to the service could be advised as part of the general instructions for using the service that they may be requested from time to time to say their authorization code or password up to three times during their attempt to access the system. The procedure upon enrollment then would include no steps unexpected by the caller, and he or she would not even recognize a difference in procedure between enrollment and actual use of the service. The enrollment process would be transparent to the caller, thereby facilitating use of the service. The enrollment process itself could be secured by requiring the caller to enter a PIN during the enrollment process. If prospective subscribers are forewarned of the possibility of needing to enter their PIN, no significant difference in procedure would be detected by subscribers during the enrollment process.

A similar technique can be utilized to provide periodic reenrollment of subscribers as an enhanced security provision. The method of the present invention can be designed to track the number of times a caller's attempts to access the service result in no voice match. The method can provide for automatic re-enrollment of the caller after some predetermined number of failed attempts. For example, after perhaps three attempts to access the service during which no voice match was obtained, the foregoing enrollment process would occur. Since subscribers would be forewarned that they may be requested to repeat their authorization code or password a number of times, the subscribers would not detect any different procedure upon undergoing the re-enrollment process, thereby providing an easy understandable method of authorizing access to telecommunication based services.

The method of the present invention may be implemented on existing telecommunication based service networks, or incorporated into new networks, having the voice verification capability referred to above. Additionally, the present invention can be implemented on an enhanced services platform such as that disclosed in co-pending and co-assigned U.S. Patent Application S.N. 505,855, incorporated herein by reference to provide a system for integrated access to a plurality of telecommunication based services as disclosed in U.S. Patent Application S.N. 505,747, which also is incorporated herein by reference.

Having thus described the preferred embodiment of the present invention it will be apparent to those skilled in the art that changes and modifications may be made to the present invention without departing from the spirit and scope of the invention as defined by the appended claims.

## Claims

1. A method of authorizing access to a telecommunications based service comprising the steps of:

   acknowledging an attempt by a caller to use the service;

   requesting entry of a service access;

   requesting entry of an authorization code;

   requesting voice entry of a password;

   verifying the identity of the caller based on the caller's voice; and

   allowing access to the service if the caller's identity is verified as being that of a valid subscriber to the service.

2. A method of authorizing access to a telecommunications based service comprising the steps of:

   acknowledging an attempt by a caller to use the system;

   then requesting entry of an authorization code;

   then requesting voice entry of a password;

   then verifying the identity of the caller based on the caller's voice; and

   then requesting entry of the service access if the caller's identity is verified as being that of a valid subscriber to the system.

3. A method of authorizing access to a telecommunications based service comprising the steps of:

   acknowledging an attempt by a caller to use the system;

   requesting entry of the destination number indicative of the service;

   requesting voice entry of an authorization code;

   verifying the identity of the caller based on the caller's voice entry of the caller's authorization code; and

   allowing access to the system if the caller's identity is verified as being that of a valid subscriber to the system.

4. The method of authorizing access to a telecommunications based service as defined in Claims 1, 2, or 3, wherein said verifying step comprises the step of comparing the caller's voice with a stored sample of the caller's voice.

5. The method of authorizing access to a telecommunications based service as defined in Claim 4, further comprising the step of updating the stored sample of the caller's voice upon successful verification of the caller's identity.

6. The method of authorizing access to a telecommunications based service as defined in Claims 1 or 3, wherein said step of requesting voice entry of an authorization code is repeated upon enrollment of the caller as a subscriber to the system.

7. The method of authorizing access to a telecommunications based service as defined in Claims 1, 2, 3, or 6, wherein said step of requesting entry of an authorization code precedes said step of requesting entry of a service access code.

8. A calling card system comprising:
   means for acknowledging an attempt by a caller to use the system;
   means for requesting entry of the caller's destination;
   means for requesting voice entry by the caller of an authorization code;
   means for verifying the identity of the caller based on the caller's voice entry of the caller's authorization code; and
   means for allowing access to the system if the caller's identity is verified as being that of a valid subscriber to the system.

9. A method of enrolling a caller as a subscriber authorized to access telecommunication based services, comprising the steps of:
   acknowledging an attempt by the caller to enroll as a subscriber to a service;
   requesting voice entry of a password from the caller and storing as a sample the voice entry of said password from said caller.

10. A method of enrolling a caller as a subscriber authorized to access telecommunication based services comprising the steps of:
    acknowledging an attempt by a caller to access the service;
    requesting voice entry of a password;
    determining whether or not said caller is a subscriber to the service;
    allowing access to said service if said caller is determined to be a subscriber, and if said caller is determined not to be a subscriber, storing as a voice sample of the caller the voice entry of the password.

11. The calling card system as defined in Claims 8 or 9, wherein said means for verifying comprises means for comparing the caller's voice with a stored sample of the caller's voice.

12. The calling card system as defined in Claim 11, further comprising means for updating the stored sample of the caller's voice upon successful verification of the caller's identity.

13. The calling card system as defined in Claim 8, wherein said means for requesting voice entry of an authorization code is operable to request repeated entry upon enrollment of the caller as a subscriber to the system.

14. The method of enrolling a caller as a subscriber authorized to access telecommunication based services as defined in Claim 10, further comprising the step of repeating a predetermined number of times said request for voice entry of a password if it is determined that said caller is not a subscriber to said service.

15. The method of enrolling a caller as a subscriber authorized to access telecommunication based services as defined in Claims 9 or 14, further comprising the step of requesting entry of an authorization code indicative of the identity of said caller.

16. The method of enrolling a caller as a subscriber authorized to access telecommunication based services as defined in Claims 9 or 15, wherein said step of requesting voice entry of said password is repeated.

17. The method of enrolling a caller as a subscriber authorized to access telecommunication based services as defined in Claim 10, further comprising the step of requesting entry of a personal identification number if it is determined that said caller is not a subscriber to the service.

```
┌─────────────────────────┐
│  ACKNOWLEDGE CALLER'S    │
│  ATTEMP TO GAIN ACCESS   │
└─────────────────────────┘
             │
             ▼
┌─────────────────────────┐
│    REQUEST ENTRY OF      │
│   SERVICE ACCESS CODE    │
└─────────────────────────┘
             │
             ▼
┌─────────────────────────┐
│    REQUEST ENTRY OF      │
│   AUTHORIZATION CODE     │
└─────────────────────────┘
             │
             ▼
┌─────────────────────────┐
│   REQUEST VOICE ENTRY    │
│      OF PASSWORD         │
└─────────────────────────┘
             │
             ▼
┌─────────────────────────┐
│   VERIFY AUTHORIZATION   │
└─────────────────────────┘
             │
             ▼
┌ ─ ─ ─ ─ ─ ─ ─ ─ ─ ─ ─ ┐      NO    ┌──────────────────┐
  AUTHORIZED USER         ──────────▶│  SERVICE OPTION  │
└ ─ ─ ─ ─ ─ ─ ─ ─ ─ ─ ─ ┘           │     PROTOCOL     │
             │                       └──────────────────┘
          YES│
             ▼
┌─────────────────────────┐
│      ALLOW  ACCESS       │
└─────────────────────────┘
```

*FIG. 1*

```
┌─────────────────────────┐
│  ACKNOWLEDGE CALLER'S    │
│  ATTEMPT TO GAIN ACCESS  │
└─────────────────────────┘
             │
             ▼
┌─────────────────────────┐
│    REQUEST ENTRY OF      │
│   AUTHORIZATION CODE     │
└─────────────────────────┘
             │
             ▼
┌─────────────────────────┐
│   REQUEST VOICE ENTRY    │
│      OF PASSWORD         │
└─────────────────────────┘
             │
             ▼
┌─────────────────────────┐
│   VERIFY AUTHORIZATION   │
└─────────────────────────┘
             │
             ▼
┌ ─ ─ ─ ─ ─ ─ ─ ─ ─ ─ ─ ┐    NO    ┌──────────────────┐
  AUTHORIZED USER         ────────▶│  SERVICE OPTION  │
└ ─ ─ ─ ─ ─ ─ ─ ─ ─ ─ ─ ┘         │     PROTOCOL     │
             │                     └──────────────────┘
          YES│
             ▼
┌─────────────────────────┐
│    REQUEST ENTRY OF      │
│   SERVICE ACCESS CODE    │
└─────────────────────────┘
             │
             ▼
┌─────────────────────────┐
│      ALLOW  ACCESS       │
└─────────────────────────┘
```

*FIG. 2*

EP 0 451 695 A2

ACKNOWLEDGE CALLER'S
ATTEMP TO GAIN ACCESS

↓

REQUEST VOICE ENTRY
OF AUTHORIZATION CODE

↓

VERIFY AUTHORIZATION

— NO → SERVICE OPTION PROTOCOL

[ AUTHORIZED USER ]

YES ↓

REQUEST ENTRY OF
SERVICE ACCESS CODE

↓

ALLOW ACCESS

FIG. 4

ACKNOWLEDGE CALLER'S
ATTEMP TO GAIN ACCESS

↓

REQUEST ENTRY OF
SERVICE ACCESS CODE

↓

REQUEST VOICE ENTRY
OF AUTHORIZATION CODE

↓

VERIFY AUTHORIZATION

— NO → SERVICE OPTION PROTOCOL

[ AUTHORIZED USER ]

YES ↓

ALLOW ACCESS

FIG. 3

9

FIG. 5

FIG. 6